# EUROPEAN PATENT APPLICATION

(11) **EP 2 181 940 A1**
(43) Date of publication of application: **05.05.2010**
(21) Application number: 08168178.5
(22) Date of filing: 03.11.2008
(51) Int. Cl.: B65D 81/34, B65D 1/36, A47J 39/00

(54) **Food tray**

(71) Applicant: Kavaring Cooking Systems B.V., 1359 HV Almere (NL)
(72) Inventor: Van der Weij, Fedde, 1359 HV, ALMERE (NL)
(74) Representative: Voncken, Bartholomeus Maria Ch.

(57) **Abstract**

Food tray (15) for use in an apparatus for preparing food of preferably the type comprising a food preparation chamber with an air-permeable bottom wall and an upper air discharge opening, a fan for circulating hot air successively through the bottom wall, food preparation chamber and discharge opening, heat radiating means positioned in the upper part of the food preparation chamber and air guide members positioned below the food preparation chamber for obtaining a regular flow pattern of the hot air through the food preparation chamber. The food tray (15) comprises a number of adjacently positioned compartments (16-18), wherein each compartment is provided with a bottom (19-21) and a circumferential sidewall (22-24) extending upwardly from said bottom, wherein at least some of the bottoms have perforations (25) therein for the passage of hot air.

## Description

The invention relates to a food tray for use in an apparatus for preparing food of preferably the type comprising a food preparation chamber with an air-permeable bottom wall and an upper air discharge opening, a fan for circulating hot air successively through the bottom wall, food preparation chamber and discharge opening, heat radiating means positioned in the upper part of the food preparation chamber and air guide members positioned below the food preparation chamber for obtaining a regular flow pattern of the hot air through the food preparation chamber.

Such an apparatus is used for heating food in the food preparation chamber from above (by the heat radiating means) and from below (by means of the flow of hot air). The circulating hot air will prepare (fry, cook) the food. The food preparation chamber may comprise a basket-like member for receiving the food to be prepared.

It is an object of the present invention to provide a food tray for use with such a food preparation apparatus.

Thus, in accordance with the present invention the food tray is **characterized in that** it comprises a number of adjacently positioned compartments, wherein each compartment is provided with a bottom and a circumferential sidewall extending upwardly from said bottom, wherein at least some of the bottoms have perforations therein for the passage of hot air.

Such a food tray may be positioned in the food preparation chamber of the food preparation apparatus while containing different food items in its compartments. Hot air will pass the perforations in the bottom of the compartments and will flow around the food items. Meanwhile the heat from the heat radiating means will reach the food items from the top of the compartments.

The food tray may be of a disposable type which is purchased while already being filled with food items. However, it is possible too that the food tray is of a re-usable type which is filled with food items by a user himself.

In a preferred embodiment of the food tray according to the invention the dimensions of the perforations of at least one compartment differ from the dimensions of the perforations of the other compartments. This offers the possibility of providing different hot air flow characteristics and, thus, different heating characteristics for different food items.

Especially when the food tray is of a re-usable type, it is possible that the dimensions of at least some of the perforations are adjustable. For example could the respective bottom comprise two superimposed sheets which are movable relative to each other and each with a pattern of perforations which, depending on the relative position of the sheets, have a different degree of alignment. However, also other constructional solutions are conceivable.

Further it is possible that the perforations are sealed at the outside of the compartment bottom by means of a removable sealing strip. As a result the compartments (and, if present therein, food items) are protected against contamination previous to use of the food tray.

For example a single common removable sealing strip could be provided for all compartments, which is removed before the food tray is used.

However, it is possible too that a sealing member is provided removably closing the compartments at the top.

In yet another embodiment the sealing member is provided with perforations, wherein optionally the dimensions of the perforations of at least one compartment differ from the dimensions of the perforations of the other compartments.

Such perforations may decrease direct radiation and may increase the retention of steam. This allows the establishment of temperature differences among the compartments. By the retention of steam the local temperature remains lower than outside the compartment. By regulating the moisture content of the food it is possible to optimise the temperature and residual moisture with respect to a defined preparation time.

Again, a single common sealing member could be provided for all compartments, but it is also possible that each compartment has its own sealing member (or that some compartments do not have such a sealing member at the top).

In a very advantageous embodiment the sealing member is sufficiently rigid to act as a supporting plate for the food tray after being removed from atop the compartments. The sealing member, moreover, then also could be used as a separate plate.

When, in accordance with yet another embodiment, the bottom of at least one compartment is free of perforations, said compartment is convenient for heating food items that require a moderate heat supply.

In such a case it further can be advantageous when the top of the compartment of which the bottom is free of perforations is sealed by a removable perforated strip. As a result the temperature within said compartment can be limited.

For an effective use of the food tray within a food preparation apparatus as stated above, it is preferred that the circumferential shape of the food tray closely matches the cross-sectional shape of the food preparation chamber of the food preparation apparatus with which the food tray is intended to be used.

Optionally the circumferential side wall of at least one of the compartments comprises outer formations such as ridges, grooves or alike. Such formations serve for increasing the area for contact with heat, improving the heat transfer.

Further perforations may be provided in walls separating adjacent compartments, improving the circulation of air and heat transfer along compartments.

Hereinafter the invention will be elucidated while referring to the drawing, in which:
Figure 1 shows an apparatus for preparing food housing an embodiment of a food tray according to the invention, in a schematic vertical cross-sectional view, and
Figure 2 shows a schematic perspective view of an embodiment of the food tray in an open position.

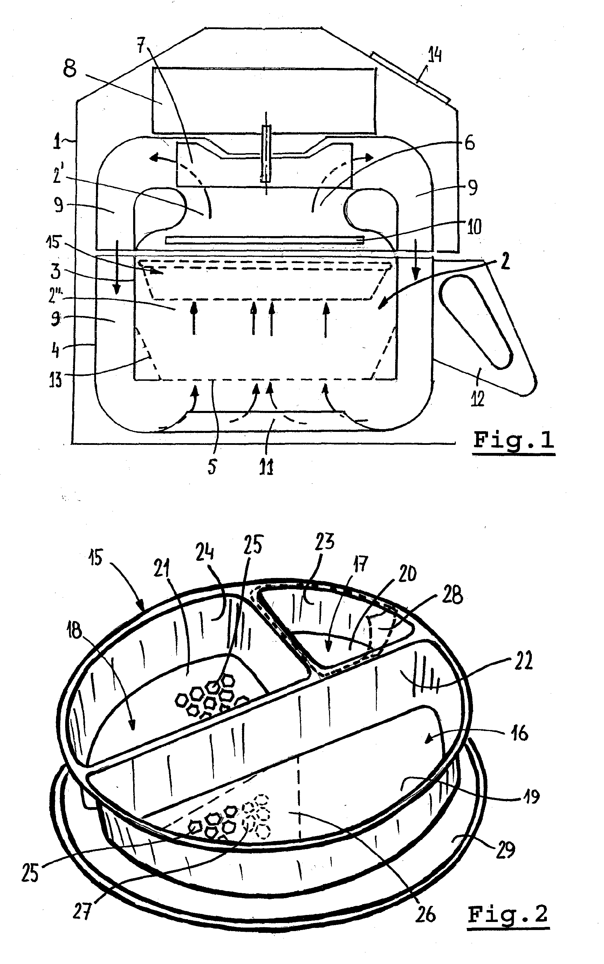

Firstly referring to figure 1, the apparatus for preparing food comprises an outer shell 1 which may be fabricated of a plastic material. Within said shell 1 a double-walled food preparation chamber 2 is defined surrounded by an inner wall 3 and an outer wall 4. In its bottom part the inner wall 3 is provided with an air-permeable bottom section 5. At its top, the inner wall is provided with a discharge opening 6 for air.

Above the discharge opening 6 a fan 7 is positioned which is driven by an electric motor 8. By means of the low pressure caused at one side of said fan 7 air is sucked from the food preparation chamber 2 through the discharge opening 6, and is delivered at a high pressure in the channel 9 defined between the inner wall 3 and outer wall 4. Thus the air is forced through said channel 9 towards and through the air-permeable bottom section 5 of the inner wall 3 to arrive again at the food preparation chamber 2.

It is noted that, although figure 1 suggests that the channel 9 between the inner wall 3 and outer wall 4 continuously surrounds the food preparation chamber 2 to define an annular channel, it also is conceivable that there are a number of distinct channels leading from the fan 7 towards the bottom section 5.

In the upper part of the food preparation chamber one (or a number of) heat radiating means 10 is positioned which not only radiates heat into the food preparation chamber and towards any food present therein, but also heats the air circulating in the apparatus and flowing upwardly past said heat radiating means 10.

Thus, food in the food preparation chamber 2 is heated simultaneously in two different manners: by heat radiated from the heat radiating means 10 and by the heated air passing the food from below.

Below the bottom section 5 the outer wall 4 is provided with air guide ribs 11. The arrangement and/or shape of these air guide ribs 11 is such that the arriving air is directed through the bottom section 5 and into the food preparation chamber 2 with a regular flow pattern. This means that across the entire cross-section of the food preparation chamber 2 the interaction between the heated air and the food is substantially equal. For example, the air guide ribs 11 may cause an essentially upwardly directed air flow through the food preparation chamber 2. Another posibility is that the air guide ribs 11 provide an unobstructed air flow pattern (that means without the presence of food) having the highest velocity in the center of the food preparation chamber 2 and decreasing radially outward. Then, when food is present the resulting air flow can have the required regular pattern.

As shown schematically in figure 1, the bottom section 5 of the inner wall 3 of the food preparation chamber has, at least partly, an open structure, for example by being defined by a grid or mesh structure.

The food preparation chamber 2 comprises an upper portion 2' and a removable lower portion 2". The lower part 2" of the food preparation chamber comprises a grip 12 and a basket-like member 13 within the double wall. Basically this basket-like member has upwardly extending walls and a horizontally extending bottom wall which in the present embodiment is defined by the bottom section 5 of the inner wall 3.

The basket-like member 13 may be replaced by a food tray 15 to be described later, but also may be provided in combination therewith.

The lower portion 2" of the food preparation chamber can be removed from the shell 1. A user then can inspect the food in the basket-like member 13, or in the food tray 15 to be described later, and can, if needed, shake the basket-like member for disturbing the food therein or may choose different settings for the operation of the apparatus by means of a control panel (to be discussed below).

Not shown are means (for example valve members) which may be provided to automatically close the channel 9 when the lower part 2" is removed. This prevents an unwanted outflow of heated air out of the apparatus in such a situation. Also could in such a case the operation of the heat radiating means 10 be interrupted automatically. Neither shown are pressure relief means which may be provided to cope with an increasing pressure within the food preparation chamber due to the heating of the food.

The upwardly extending walls of the basket-like member 13 diverge in such a way that the basket-like member 13 has an inverted frusto-conical shape. As a result a disposition of the food therein having a cross-sectional area increasing upwardly is provided which can be helpful in obtaining the regular flow pattern and even processing or preparing of the food sought for.

Preferably the food preparation chamber 2 has a circular horizontal cross-section which also aids in obtaining a regular flow pattern.

On top of the shell 1 a control panel 14 is shown with which the operation of the apparatus can be controlled (e.g. by setting parameters such as temperature, heating time, flow velocity etcetera).

The food preparation chamber 2 houses a food tray 15 which has been indicated in dotted lines in figure 1. As stated above, the food tray may be positioned within or above the basket-like member 13 (as illustrated), or it may replace the basket-like member. Preferably the food preparation chamber 2 will be provided with appropriate support members (not illustrated) for removably supporting and maintaining the food tray in a correct position therein. However, such support members also may be defined by the basket-like member 13.

Referring to figure 2, the food tray 15 comprises a number of adjacently positioned compartments 16-18, wherein each compartment is provided with a bottom 19-21, respectively, and a circumferential sidewall 22-24, respectively, extending upwardly from said bottom.

At least some of the bottoms have perforations 25 therein for the passage of hot air. In the shown embodiment this applies for the bottoms 19 and 21 of compartments 16 and 18, respectively. Although only a few perforations 25 are illustrated, generally the respective bottoms will be covered substantially entirely by such perforations 25.

It is possible that the dimensions of the perforations 25 of at least one compartment differ from the dimensions of the perforations of the other compartments, dependent upon the specific food item within the respective compartments. In the illustrated embodiment the perforations 25 are shown with equal dimensions.

The dimensions of at least some of the perforations 25 may be adjustable, for example when below at least part of the bottom 19 of a compartment 16 a movable sheet 26 is positioned having perforations 27. The pattern of perforations 25,27 of the bottom 19 and sheet 26, respectively, have a different degree of alignment, depending on the relative position of the sheet and bottom, thus regulating the resulting, combined, perforations (or passages) through the respective bottom.

Previous to use of the food tray the perforations may be sealed at the outside of the compartment bottoms by means of a removable sealing strip (not illustrated). For example a single common removable sealing strip may be provided for all compartments.

Figure 2 shows (in dotted lines) a sealing member 28 for removably closing compartment 17 at its top. In figure 2 this sealing member 28 has partially been peeled off.

It is possible, too, that a single common sealing member is provided for all compartments 15-17. Such common sealing member could be a cover 29 which is sufficiently rigid to act as a supporting plate for the food tray 15 after being removed from atop the compartments, as illustrated in figure 2.

In figure 2 one can see that the bottom 20 of compartment 17 is free of perforations. For the preparation of specific food items (such as, e.g, vegetables) the sealing member 28 then may comprise a perforated strip. Then steam can pass the sealing member.

For obtaining a good operation of the food tray 15 within the apparatus illustrated in figure 1, the circumferential shape of the food tray closely matches the cross-sectional shape of the food preparation chamber 2 of the food preparation apparatus.

The invention is not limited to the embodiments described before which may be varied widely within the scope of the invention as defined by the appending claims.

## Claims

1. Food tray for use in an apparatus for preparing food of preferably the type comprising a food preparation chamber with an air-permeable bottom wall and an upper air discharge opening, a fan for circulating hot air successively through the bottom wall, food preparation chamber and discharge opening, heat radiating means positioned in the upper part of the food preparation chamber and air guide members positioned below the food preparation chamber for obtaining a regular flow pattern of the hot air through the food preparation chamber, **characterized in that** the food tray comprises a number of adjacently positioned compartments, wherein each compartment is provided with a bottom and a circumferential sidewall extending upwardly from said bottom, wherein at least some of the bottoms have perforations therein for the passage of hot air.

2. Food tray according to claim 1, wherein the dimensions of the perforations of at least one compartment differ from the dimensions of the perforations of the other compartments.

3. Food tray according to claim 1 or 2, wherein the dimensions of at least some of the perforations are adjustable.

4. Food tray according to any one of the previous claims, wherein the perforations are sealed at the outside of the compartment bottom by means of a removable sealing strip.

5. Food tray according to claim 4, wherein a single common removable sealing strip is provided for all compartments.

6. Food tray according to any one of the previous claims, comprising a sealing member removably closing the compartments at the top.

7. Food tray according to claim 6, wherein the sealing member is provided with perforations.

8. Food tray according to claim 7, wherein the dimensions of the perforations of at least one compartment differ from the dimensions of the perforations of the other compartments.

9. Food tray according to one of the claims 6-8, wherein a single common sealing member is provided for all compartments.

10. Food tray according to claim 9, wherein the sealing member is sufficiently rigid to act as a supporting plate for the food tray after being removed from atop the compartments.

11. Food tray according to any one of the previous claims, wherein the bottom of at least one compartment is free of perforations.

12. Food tray according to claim 11, wherein the top of the compartment of which the bottom is free of perforations is sealed by a removable perforated strip.

13. Food tray according to any one of the previous claims, wherein the circumferential shape of the food tray closely matches the cross-sectional shape of the food preparation chamber of the food preparation apparatus with which the food tray is intended to be used.

14. Food tray according to any of the previous claims, wherein the circumferential side wall of at least one of the compartments comprises outer formations such as ridges, grooves or alike.

15. Food tray according to any of the previous claims, wherein perforations are provided in walls separating adjacent compartments.

16. Food tray according to any one of the previous claims and comprising food items in its compartments.
